(19) Europäisches Patentamt
European Patent Office
Office européen des brevets

(11) **EP 4 303 246 A1**

(12) **EUROPÄISCHE PATENTANMELDUNG**

(43) Veröffentlichungstag:
**10.01.2024 Patentblatt 2024/02**

(21) Anmeldenummer: **22182811.4**

(22) Anmeldetag: **04.07.2022**

(51) Internationale Patentklassifikation (IPC):
*C08G 18/78* (2006.01)   *C08G 18/79* (2006.01)
*C08G 18/73* (2006.01)   *C09D 175/06* (2006.01)

(52) Gemeinsame Patentklassifikation (CPC):
**C08G 18/7837; C08G 18/73; C08G 18/792;
C09D 175/06**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG
51373 Leverkusen (DE)**

(72) Erfinder: **Die Erfindernennung liegt noch nicht vor**

(74) Vertreter: **Levpat
c/o Covestro AG
Gebäude K12
51365 Leverkusen (DE)**

(54) **POLYISOCYANATGEMISCH**

(57)    Die vorliegende Erfindung betrifft ein Polyisocyanatgemisch, enthaltend mindestens ein Polyisocyanurat-Polyisocyanat und mindestens ein Polyallophanat-Polyisocyanat, wobei das Polyisocyanatgemisch einen Gehalt an monomeren Diisocyanaten von < 0,10 Gew.-%, bestimmt nach DIN EN ISO 10283:2007-11 gaschromatographisch mit internem Standard, einen Isocyanuratgruppenanteil von ≥ 40 mol-% bis ≤ 85 mol-%, bestimmt durch NMR spektroskopische Analyse und bezogen auf die Gesamtmenge an Isocyanuratgruppen und Allophanatgruppen des Polyisocyanatgemisches, und einen Allophanatgruppenanteil von ≥ 15 mol-% bis ≤ 60 mol-%, bestimmt durch NMR spektroskopische Analyse und bezogen auf die Gesamtmenge an Isocyanuratgruppen und Allophanatgruppen des Polyisocyanatgemisches, aufweist.

EP 4 303 246 A1

**Beschreibung**

Die Erfindung betrifft ein Polyisocyanatgemisch sowie dessen Verwendung. Weitere Gegenstände der Erfindung sind ein, das Polyisocyanatgemisch enthaltendes Beschichtungsmittel, ein Verfahren zur Herstellung einer Beschichtung auf einem Substrat, die nach diesem Verfahren erhältliche Beschichtung sowie das beschichtete Substrat.

Für hochwertige lichtechte Lacke kommen dabei besonders Beschichtungen aus aliphatischen Polyisocyanaten und Polyolen wie z. B. Polyacrylatpolyolen, Polyesterpolyolen oder Polycarbonatpolyolen zum Einsatz. Als Polyisocyanate kommen für diese hochwertigen Beschichtungen besonders Derivate hergestellt aus 1,6-Hexamethylendiisocyanat (HDI) zum Einsatz.

Insbesondere mit steigenden Anforderungen an die Beständigkeit eines Beschichtungssystems z. B. in der Wetterbeständigkeit und Chemikalienbeständigkeit gepaart mit einem hohen Abriebwiderstand, Glanzhaltung und Lichtechtheit sind auf Bindemittelseite eher hoch OH-Gruppen haltige Systeme nötig. Solche Systeme besitzen auf Grund ihrer chemischen Zusammensetzung eine gegenüber Standardbindemitteln erhöhte Polarität.

Die EP 0 277 353 A1 beschreibt Polyisocyanate mit Biuret-Struktur, die gut verträglich sein sollen. Jedoch kann bei Biuret-haltigen Polyisocyanaten die Monomerenstabilität reduziert sein.

Als Vernetzungsmittel werden auch in diesen Anwendungen bevorzugt Polyisocyanurate eingesetzt, da diese aufgrund ihrer geringeren Viskosität die Formulierung von festkörperreichen, VOC-konforme ("volatile organic compounds"/"Flüchtige organische Verbindungen") Lacksystemen ermöglichen. Solche Polyisocyanurate werden in DE-A2 839 133 beschrieben. Jedoch weisen diese im Vergleich zu Biuret-haltigen Polyisocyanaten häufig eine geringere Verträglichkeit im Lacksystem auf.

Alternativ zu reinen Polyisocyanuraten beschreibt die WO 2019/061019 A1 hoch allophanatgruppenhaltige Polyisocyanat-Vernetzer, die durch Anwesenheit von Alkoholen während der katalytischen Trimerisierung hergestellt werden. Jedoch weisen diese den Nachteil einer hohen Viskosität auf.

Es bestand also weiterhin der Bedarf, ein Polyisocyanatgemisch bereitzustellen, das bei hoher Chemikalienresistenz sowohl eine hohe Verarbeitungszeit und gute Einarbeitungseigenschaften, wie auch eine gute Optik der erhaltenen Beschichtungen aufweist.

Daher war es die Aufgabe der vorliegenden Erfindung ein Polyisocyanatgemisch bereitzustellen, das bei hoher Chemikalienresistenz sowohl eine hohe Verarbeitungszeit und gute Einarbeitungseigenschaften, wie auch eine gute Optik der erhaltenen Beschichtungen aufweist.

Diese Aufgabe wird erfindungsgemäß gelöst, durch ein Polyisocyanatgemisch, enthaltend mindestens ein Polyisocyanurat-Polyisocyanat und mindestens ein Polyallophanat-Polyisocyanat, wobei das Polyisocyanatgemisch

einen Gehalt an monomeren Diisocyanaten von < 0,10 Gew.-%, bestimmt nach DIN EN ISO 10283:2007-11 gaschromatographisch mit internem Standard,

einen Isocyanuratgruppenanteil von $\geq$ 40 mol-% bis $\leq$ 85 mol-%, bestimmt durch NMR spektroskopische Analyse und bezogen auf die Gesamtmenge an Isocyanuratgruppen und Allophanatgruppen des Polyisocyanatgemisches, und

einen Allophanatgruppenanteil von $\geq$ 15 mol-% bis $\leq$ 60 mol-%, bestimmt durch NMR spektroskopische Analyse und bezogen auf die Gesamtmenge an Isocyanuratgruppen und Allophanatgruppen des Polyisocyanatgemisches, aufweist.

Bevorzugt bedeuten erfindungsgemäß die Ausdrücke "umfassend" oder "enthaltend", "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

Das erfindungsgemäße Polyisocyanatgemisch stellt eine physikalische Abmischung dar und unterscheidet sich somit von einem rein chemisch hergestellten Polyisocyanat beispielsweise hinsichtlich der Oligomerenverteilung, da im erfindungsgemäßen Polyisocyanatgemisch keine statistische Verteilung der Allophanat und Isocyanuratgruppen über die Gesamtheit an Polyisocyanat-Oligomeren vorliegt.

Das mindestens eine Polyisocyanurat-Polyisocyanat kann - wenn überhaupt nur in untergeordneten Mengen noch andere Struktureinheiten, wie beispielsweise Uretdionstrukturen aber auch Allophanatstrukturen enthalten, wobei Isocyanuratstrukturen in jedem Fall den Hauptanteil, vorzugsweise mehr als 80 mol-% und besonders bevorzugt mehr als 90 mol-%, bestimmt mittels NMR spektroskopischer Analyse und bezogen auf die Gesamtmenge an Isocyanuratgruppen, Allophanatgruppen und gegebenenfalls weiterer Oligomerisierungsstrukturen des Polyisocyanurat-Polyisocyanates, ausmachen. Erfindungsgemäß können als Polyisocyanurat-Polyisocyanate auch Isocyanurat-Iminooxadiazindion-Polyisocyanate eingesetzt werden, die einen Anteil von 5 bis 20 mol-% an Iminooxadiazindionstrukturen (auch als asymmetrische Trimere bezeichnet) und einen Isocyanurat-Anteil von mindestens 50 mol-%, bestimmt mittels NMR spektroskopischer Analyse und bezogen auf die Gesamtmenge an Isocyanuratgruppen, Iminooxadiazindiongruppen,

Allophanatgruppen und gegebenenfalls weiterer Oligomerisierungsstrukturen des Polyisocyanurat-Polyisocyanates, aufweisen. Solche Isocyanurat-Iminooxadiazindion-Polyisocyanate werden vorliegend auch als Polyisocyanurat-Polyisocyanate bezeichnet.

Das mindestens eine Polyallophanat-Polyisocyanat kann - wenn überhaupt nur in untergeordneten Mengen noch andere Struktureinheiten, wie Uretdionstrukturen, Iminoxadiazindionstrukturen (sogenannten asymmetrischen Trimeren) aber auch Isocyanuratstrukturen enthalten, wobei die Allophanatstrukturen in jedem Fall den Hauptanteil, ausmachen. Erfindungsgemäß können hier aber auch Allophanat-Isocyanurat-Mischprodukte eingesetzt werden, die einen AllophanatAnteil von mindestens 50 mol-%, bestimmt mittels NMR spektroskopischer Analyse und bezogen auf die Gesamtmenge an Isocyanuratgruppen, Iminooxadiazindiongruppen, Allophanatgruppen und gegebenenfalls weiterer Oligomerisierungsstrukturen des Polyallophanat-Polyisocyanates, enthalten. Solche Allophanat-Isocyanurat-Mischprodukte werden vorliegend auch als Polyallophanat-Polyisocyanate bezeichnet.

Die Gehalte (mol-%) der in dem erfindungsgemäßen Polyisocyanatgemisch bzw. in den einzelnen, für das Gemisch verwendeten Polyisocyanaten vorliegenden Isocyanurat- und Allophanatstrukturen werden vorzugsweise aus den Integralen protonenentkoppelter $^{13}$C-NMR-Spektren errechnet und beziehen sich jeweils auf die Summe an vorliegenden Isocyanurat- und Allophanatstrukturen. Es wurde dazu ein Bruker AV III HD 600 NMR Spektrometer mit Probenkopf Z150361_001 (CP BBO 600SS3 BB-H&F-05 ZE T) bei 512 Scans verwendet. Bei einer Repititionszeit (D1) von 4s und einer Messzeit (AQ) von 1,57s wird erfahrungsgemäß davon ausgegangen, dass sehr ähnliche Carbonyl-Kohlenstoffatome über Integration vergleichbar sind. Im Falle von in $CDCl_3$ gelösten auf Hexamethylendiisocyanat basierenden Polyisocyanaten weisen die einzelnen Strukturelemente folgende chemische Verschiebungen (in ppm) auf: Isocyanurat: 148.4; Iminooxadiazindion: 147.8, 144.3 und 135.3; Allophanat: 155.7 und 153.8. Chemische Verschiebungen (in ppm) untergeordnet gegebenenfalls vorliegender Strukturelemente sind im Fall von in $CDCl_3$ gelösten auf Hexamethylendiisocyanat basierenden Polyisocyanaten folgende: Uretdion: 157.1; Biuret: 155,5; Urethan: 156,3; Oxadiazintrion: 147,8 und 143,9; Uretonimin: 158,7 und 144,6.

Das gewichtsmittlere Molekulargewicht sowohl des Polyisocyanatgemisches als auch der einzelnen für das Gemisch verwendeten Polyisocyanate wird im Rahmen der vorliegenden Erfindung mittels Gelpermeations-Chromatographie nach der DIN EN ISO 13885-1:2021-11unter Verwendung von Polystyrol als Standard bestimmt.

Der Gehalt an monomeren Diisocyanaten wird nach DIN EN ISO 10283:2007-11 gaschromatographisch mit internem Standard bestimmt.

Im Rahmen der Erfindung ist die Topfzeit (nachfolgend auch als "Potlife" bezeichnet) als die Zeit definiert, in die Beschichtungszusammensetzung ihre Viskosität (indirekt bestimmt durch Verdoppelung der Auslaufzeit im DIN-Becher, 4 mm) verdoppelt hat.

Eine "organische Verbindung" oder "organischer Rest" enthält mindestens eine Einheit, die eine kovalente Kohlenstoff-Wasserstoff-Bindung umfasst.

Vorliegend ist der Begriff "aliphatisch" definiert als nicht-aromatische Kohlenwasserstoffgruppen, die gesättigt oder ungesättigt sind.

Vorliegend ist der Begriff "araliphatisch" definiert als Kohlenwasserstoffreste, die sowohl aus einer aromatischen als auch aus einer gesättigten oder ungesättigten Kohlenwasserstoffgruppe bestehen, die direkt an den aromatischen Rest gebunden ist.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens ein Polyallophanat-Polyisocyanat" bedeutet daher beispielsweise, dass nur eine Art von Verbindung oder mehrere verschiedene Arten von Verbindungen dieser Art, ohne Angaben über die Menge der einzelnen Verbindungen zu machen, enthalten sein können.

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

In einer ersten bevorzugten Ausführungsform weist das erfindungsgemäße Polyisocyanatgemisch einen Isocyanuratgruppenanteil von $\geq$ 45 mol-% bis $\leq$ 80 mol-%, bevorzugt $\geq$ 50 mol-% bis $\leq$ 75 mol-% und besonders bevorzugt $\geq$ 53 mol-% bis $\leq$ 72 mol-%, bestimmt durch NMR spektroskopische Analyse und bezogen auf die Gesamtmenge an Isocyanuratgruppen und Allophanatgruppen des Polyisocyanatgemisches, und/oder einen Allophanatgruppenanteil von $\geq$ 20 mol-% bis $\leq$ 55 mol-%, bevorzugt $\geq$ 25 mol-% bis $\leq$ 50 mol-% und besonders bevorzugt $\geq$ 28 mol-% bis $\leq$ 47 mol-%, bestimmt durch NMR spektroskopische Analyse und bezogen auf die Gesamtmenge an Isocyanuratgruppen und Allophanatgruppen des Polyisocyanatgemisches, auf. Hieraus ergibt sich der Vorteil, dass ein weiter verlängertes Potlife bei mindestens gleichbleibend guter Verträglichkeit im Lacksystem erzielt wird.

In einer weiteren bevorzugten Ausführungsform weist das erfindungsgemäße Polyisocyanatgemisch ein gewichtsmittleres Molekulargewicht von $\geq$ 1000 g/mol bis $\leq$ 3000, bevorzugt von $\geq$ 1300 g/mol bis $\leq$ 2700 g/mol und besonders bevorzugt von ≥ 1500 g/mol bis ≤ 2500 g/mol, bestimmt nach EN ISO 13885-1:2021-11, auf. Hieraus ergibt sich der weitere Vorteil, dass bei guter Chemikalienbeständigkeit ein weiter verbessertes Potlife erreicht wird.

In einer weiteren bevorzugten Ausführungsform weist das erfindungsgemäße Polyisocyanatgemisch eine Polydispersität von ≥ 1,5 bis ≤ 2,5, bevorzugt von ≥ 1,7 bis ≤ 2,2, bestimmt nach DIN 55672-1:2016-03, aufweist. Auch hieraus ergibt sich der weitere Vorteil, dass bei guter Chemikalienbeständigkeit ein weiter verbessertes Potlife erreicht wird und in Kombination der beiden vorgenannten bevorzugten Ausführungsformen noch weiter gesteigert werden kann.

Als Ausgangsverbindungen zur Herstellung von Polyisocyanurat-Polyisocyanaten und Polyallophanat-Polyisocyanaten, die zur Herstellung des erfindungsgemäßen Polyisocyanatgemisches geeignet sind, sind beliebige monomere Diisocyanate mit aliphatisch, cycloaliphatisch, araliphatisch und/oder aromatisch gebundenen Isocyanatgruppen geeignet, die nach beliebigen Verfahren, z.B. durch Phosgenierung oder auf phosgenfreiem Weg, beispielsweise durch Urethanspaltung, hergestellt werden können.

Geeignete monomere Diisocyanate, im Folgenden auch Ausgangsdiisocyanate genannt, sind beispielsweise solche des Molekulargewichtsbereiches 168 bis 400 g/mol, wie z.B. 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan ($H_{12}$-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol (XDI), 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüber hinaus beispielsweise in Justus Liebigs Annalen der Chemie, 562, 1949, 75-136.

Als Ausgangsdiisocyanate besonders bevorzugt sind lineare oder verzweigte, aliphatische oder cycloaliphatische Diisocyanate der genannten Art. Ganz besonders bevorzugte Ausgangsdiisocyanate sind 1,6-Diisocyanatohexan, 1-Isocyanato-3,3,5-trimethyl-5-isocyanatomethylcyclohexan, 2,4'- und/oder 4,4'-Diisocyanatodicyclohexylmethan, 1,3- und 1,4-Bis-(isocyanatomethyl)benzol oder beliebige Gemische dieser Diisocyanate. Insbesondere geeignet ist 1,6-Diisocyanatohexan (HDI).

Die Ausgangsdiisocyanate können nach verschiedenen an sich bekannten Modifizierungsverfahren zu Polyisocyanurat-Polyisocyanaten und/oder zu Polyallophanat-Polyisocyanaten umgesetzt werden. Diese Polyisocyanurat-Polyisocyanate und Polyallophanat-Polyisocyanate werden so abgemischt, dass das erfindungsgemäße Polyisocyanatgemisch erhalten wird. Hierbei können beliebige Mischungsverhältnisse genutzt werden, die der Fachmann anhand der einzelnen Polyisocyanat Kenndaten, wie z.B. molarer Gehalt an Isocyanurat- bzw. Allophanatgruppen durch NMR spektroskopische Analyse oder, falls bevorzugt, Bestimmung des gewichtsmittleren Molekulargewichts per eingangs genannter DIN EN ISO 13885-1:2021-11 unter Verwendung von Polystyrol als Standard bestimmt, ohne großen Aufwand ausgewählt werden kann.

In einer weiteren bevorzugten Ausführungsform umfasst das mindestens eine Polyisocyanurat-Polyisocyanat eine oder mehrere Isocyanuratgruppen, die jeweils über eine aliphatische, cycloaliphatische oder araliphatische Gruppe mit einem Molekulargewicht von ≥ 56 bis ≤ 316 g/mol, bevorzugt jeweils über eine 1,4-Butyl- oder 1,6-Hexylgruppe und besonders bevorzugt jeweils über eine 1,6-Hexylgruppe, chemisch miteinander verbunden sind.

Eine bevorzugte Modifizierungsreaktion zur Herstellung von Polyisocyanurat-Polyisocyanaten für das erfindungsgemäße Polyisocyanatgemisch ist beispielsweise die katalytische Trimerisierung von Ausgangsdiisocyanaten. Dabei können als Katalysatoren prinzipiell alle Verbindungen eingesetzt werden, die die Trimerisierung von Isocyanatgruppen zu Isocyanuratstrukturen beschleunigen.

Geeignete Katalysatoren zur Herstellung von Polyisocyanurat-Polyisocyanaten sind beispielsweise einfache tertiäre Amine, wie z.B. Triethylamin, Tributylamin, N,N-Dimethylanilin, N-Ethylpiperidin, N, N'-Dimethylpiperazin, oder tertiäre Phosphine, wie z.B. Triethylphosphin, Tributylphosphin oder Dimethylphenylphosphin. Geeignete Katalysatoren sind auch die in der GB 2 221 465 beschriebenen tertiären Hydroxyalkylamine, wie z.B. Triethanolamin, N-Methyldiethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z.B. DBU, mit einfachen niedermolekularen aliphatischen Alkoholen bestehenden Katalysatorsysteme.

Als Trimerisierungskatalysatoren ebenfalls geeignet sind eine Vielzahl unterschiedlicher Metallverbindungen. Geeignet sind beispielsweise die in der DE-A 3 240 613 als Katalysatoren beschriebenen Oktoate und Naphthenate von Mangan, Eisen, Cobalt, Nickel, Kupfer, Zink, Zirkonium, Cer oder Blei oder deren Gemische mit Acetaten von Lithium, Natrium, Kalium, Calcium oder Barium, die aus DE-A 3 219 608 bekannten Natrium- und Kalium-Salze von linearen oder verzweigten Alkancarbonsäuren mit bis zu 10 C-Atomen, wie z.B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z.B. Natrium- oder Kaliumbenzoat, die aus der GB 1 391 066 A und GB 1 386 399 A bekannten Alkaliphenolate, wie z.B. Natrium- oder Kaliumphenolat, die aus der GB 809 809 bekannten Alkali- und Erdalkalioxide, -hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z.B. Natriummethoxid, Natriumacetat, Kaliumacetat, Natriumacetoessigester, Blei-2-ethylhexanoat und Bleinaphthenat, die aus der EP-A 0 056 158 und EP-A 0 056 159 bekannten, mit Kronenethern oder Polyetheralkoholen komplexierten basischen Alkalimetallverbindungen, wie z.B. komplexierte Natrium- oder Kaliumcarboxylate, das aus der EP-A 0 033 581 bekannte Pyrrolidinon-Kaliumsalz, die aus EP-A 2 883 895 bekannten ein- oder mehrkernigen Komplexverbindungen von Titan, Zirkonium und/oder Hafnium, wie z.B. Zirkoniumtetra-n-butylat, Zirkoniumtetra-2-ethylhexanoat und Zirkoniumtetra-2-ethylhexylat, sowie Zinnverbindungen der im European Polymer Journal, 16, 1979, 147-148 beschriebenen Art, wie z.B. Dibutylzinndichlorid, Diphenylzinndichlorid, Triphenylstannanol, Tributylzinnacetat, Tributylzinnoxid, Zinnoctoat, Dibutyl(dimethoxy)stannan und Tributylzinnimidazolat.

Weitere zur Herstellung von Polyisocyanuratpolyisocyanaten geeignete Trimerisierungskatalysatoren sind beispielsweise die aus der DE-A 1 667 309, EP-A 0 013 880 und EP-A 0 047 452 bekannten quartären Ammoniumhydroxide, wie z.B. Tetraethylammoniumhydroxid, Trimethylbenzylammoniumhydroxid, N,N-Dimethyl-N-dodecyl-N-(2-hydroxyäthyl) ammoniumhydroxid, N-(2-Hydroxyäthyl)-N,N-dimethylN-(2,2'-dihydroxymethylbutyl)-ammoniumhydroxid und 1-(2-Hydroxyethyl)-1,4-diazabicyclo-[2.2.2]-octanhydroxid (Monoaddukt von Äthylenoxid und Wasser an 1,4-Diazabicyclo-[2.2.2]-octan), die aus EP-A 37 65 oder EP-A 10 589 bekannten quartären Hydroxyalkylammoniumhydroxide, wie z.B. N,N,N-Trimethyl-N-(2-hydroxyäthyl)-ammonium-hydroxid, die aus DE-A 2631733, EP-A 0 671 426, EP-A 1 599 526 und US 4,789,705 bekannten Trialkylhydroxylalkylammoniumcarboxylate, wie z.B. N,N,N-Trimethyl-N-2-hydroxypropylammonium-p-tert.-butylbenzoat und N,N,N-Trimethyl-N-2-hydroxypropylammonium-2-ethylhexanoat, die aus der EP-A 1 229 016 bekannten quartären Benzylammoniumcarboxylate, wie z.B. N-Benzyl-N,N-dimethyl-N-ethylammoniumpivalat, N-Benzyl-N,N-dimethyl-N-ethylammonium-2-ethylhexanoat, N-Benzyl-N,N,N-tributylammonium-2-ethylhexanoat, N,N-Dimethyl-N-ethyl-N-(4-methoxybenzyl)ammonium-2-ethylhexanoat oder N,N,N-Tributyl-N-(4-methoxybenzyl)ammoniumpivalat, die aus der WO 2005/087828 bekannten tetrasubstituierten Ammonium-$\alpha$-hydroxycarboxylate, wie z.B. Tetramethylammonium-lactat, die aus der EP-A 0 339 396, EP-A 0 379 914 und EP-A 0 443 167 bekannten quartären Ammonium- oder Phosphoniumfluoride, wie z.B. N-Methyl-N,N,N-trialkylammoniumfluoride mit $C_8$-$C_{10}$-Alkylresten, N,N,N-Tetra-n-butylammoniumfluorid, N,N,N-Trimethyl-N-benzylammoniumfluorid, Tetramethylphosphoniumfluorid, Tetraethylphosphoniumfluorid oder Tetra-n-butylphosphoniumfluorid, die aus der EP-A 0 798 299, EP-A 0 896 009 und EP-A 0 962 455 bekannten quartären Ammonium- und Phosphoniumpolyfluoride, wie z.B. Benzyltrimethylammoniumhydrogenpolyfluorid, die aus der EP-A 0 668 271 bekannten Tetraalkylammoniumalkylcarbonate, die durch Umsetzung tertiärer Amine mit Dialkylcarbonaten erhältlich sind, oder betainstrukturierte Quartär-Ammonioalkylcarbonate, die aus der WO 1999/023128 bekannten quartär en Ammoniumhydrogencarbonate, wie z.B. Cholin-bicarbonat, die aus der EP 0 102 482 bekannten, aus tertiären Aminen und alkylierend wirkenden Estern von Säuren des Phosphors erhältlichen quartären Ammoniumsalze, wie z.B. Umsetzungsprodukte von Triethylamin, DABCO oder N-Methylmorpholin mit Methanphosphonsäuredimethylester, oder die aus WO 2013/167404 bekannten tetrasubstituierten Ammoniumsalze von Lactamen, wie z.B. Trioctylammoniumcaprolactamat oder Dodecyltrimethylammoniumcaprolactamat.

Diese Katalysatoren können sowohl einzeln als auch in Form beliebiger Gemische untereinander eingesetzt werden. Bevorzugte Katalysatoren sind Ammonium- und Phospohoniumsalze der vorstehend genannten Art, insbesondere Trialkylhydroxylalkylammoniumcarboxylate, Benzylammoniumcarboxylate, quartären Ammoniumhydroxyde, Hydroxyalkylammoniumhydroxide, Ammonium- oder Phosphoniumfluoride sowie Ammonium- und Phosphoniumpolyfluoride der genannten Art. Besonders bevorzugte Trimerisierungskatalysatoren sind die quartären Ammoniumhydroxide sowie Ammonium- und Phosphoniumpolyfluoride der genannten Art.

Bei der Herstellung von Polyisocyanurat-Polyisocyanaten für das erfindungsgemäße Polyisocyanatgemisch kommt der Trimerisierungskatalysator im Allgemeinen in einer auf die Menge der eingesetzten Ausgangsdiisocyanate bezogenen Konzentration von 0,0005 bis 5,0 Gew.-%, bevorzugt von 0,0010 bis 2,0 Gew.-% und besonders bevorzugt von 0,0015 bis 1,0 Gew.-% zum Einsatz.

Die Zugabe der Trimerisierungskatalysatoren zu den Ausgangsdiisocyanaten erfolgt vorzugsweise in Substanz. Gegebenenfalls können die genannten Trimerisierungskatalysatoren zur Verbesserung ihrer Verträglichkeit jedoch auch in einem geeigneten organischen Lösungsmittel gelöst eingesetzt werden. Der Verdünnungsgrad der Katalysatorlösungen kann dabei innerhalb eines sehr breiten Bereichs frei gewählt werden. Katalytisch wirksam sind solche Katalysatorlösungen üblicherweise ab einer Konzentration von 0,01 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyletheracetat, Ethylenglykolmonoethyletheracetat, Diethylenglykolethyletheracetat, Diethylenglykolbutyletheracetat, Propylenglykolmonomethyletheracetat, 1-Methoxypropyl-2-acetat, 3-Methoxy-n-butylacetat, Propylenglykoldiacetat, Aceton, Methylethylketon, Methylisobutylketon, Cyclohexanon, Lactone, wie ß-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Sofern bei der Herstellung geeigneter Polyisocyanuratpolyisocyanate Katalysatorlösungsmittel zum Einsatz kommen, werden bevorzugt Katalysatorlösungsmittel, die gegenüber Isocyanaten reaktive Gruppen tragen und in das Polyisocyanurat-Polyisocyanat eingebaut werden können, verwendet. Beispiele für solche Lösungsmittel sind ein- oder mehrwertige einfache Alkohole, wie z.B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z.B. 1-Methoxy-2-propanol, 3-Ethyl-3-hydroxymethyloxetan, Tetrahydrofurfurylalkohol, Ethylenglykol-monomethylether, Ethylenglykolmonoethylether, Ethylenglykolmonobutylether, Diethylen-glykolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z.B. Allylalkohol, 1,1-Dimethylallylalkohol oder Oleinalkohol; araliphatische Alkohole wie z.B. Benzylalkohol; N-monosubstituierte Amide, wie z.B. N-Methylformamid, N-Methylacetamid, Cyanacetamid oder 2-Pyrrolidinon oder beliebige Gemische derartiger Lösungsmittel. Für den Fall einer optionalen Mitverwendung solcher gegenüber Isocyanaten reaktive Gruppen tragender Katalysatorlösungsmittel, werden hierdurch eventuell gebildete Allohpanatgruppen mit zu dem erfindungsgemäßen molaren Anteil an Allophanatgruppen und mit der Gesamtmenge an Isocyanurat- und Allophanatgruppen im erfindungsgemäßen Polyisocyanatgemisch gezählt.

Erfindungsgemäß können als Polyisocyanurat-Polyisocyanate auch Isocyanurat-Iminooxadiazindion-Polyisocyanate eingesetzt werden, die einen Isocyanurat-Anteil von mindestens 50 mol-% enthalten, diese werden vorliegend im Rahmen der Erfindung auch als Polyisocyanurat-Polyisocyanate bezeichnet. Solche Iminooxadiazindiongruppen (auch asymmetrische Trimere genannt) können nach z.B. in EP-A 0 798 299, EP-A 0 962 454, WO2015/124504 oder WO 2017/029266 beschriebenen Verfahren hergestellt werden.

Die Herstellung von Polyisocyanurat-Polyisocyanaten für das erfindungsgemäße Polyisocyanatgemisch erfolgt nach an sich bekannten Verfahren, wie sie beispielsweise in den vorstehend bei der Aufzählung geeigneter Trimerisierungskatalysatoren genannten Veröffentlichungen beschrieben sind.

In der Regel werden dabei die Ausgangsdiisocyanate, gegebenenfalls unter Inertgas, wie beispielsweise Stickstoff, und gegebenenfalls in Gegenwart von Lösungsmittel, beispielsweise solchen, wie sie vorstehend als mögliche gegenüber Isocyanatgruppen inerte Katalysatorlösungsmittel aufgeführt sind, bei einer Temperatur zwischen 0 und 150°C, vorzugsweise 20 bis 130°C, besonders bevorzugt 40 bis 120°C mit einem geeigneten Trimerisierungskatalysator in der oben genannten Menge versetzt, worauf die Trimerisierungsreaktion unter Bildung von Isocyanuratstrukturen einsetzt.

Der Verlauf der Umsetzung kann, wie bei allen Herstellverfahren von Polyisocyanaten für die erfindungsgemäße Verwendung, durch z.B. titrimetrische Bestimmung des NCO-Gehaltes nach DIN EN ISO 11909:2007-05 verfolgt werden.

Nach Erreichen des angestrebtes Oligomerisierungsgrades wird die Trimerisierungsreaktion abgebrochen, wobei unter "Oligomerisierungsgrad" der Prozentsatz der im Reaktionsgemisch ursprünglich vorhandenen Isocyanatgruppen zu verstehen ist, der während des Herstellprozesses vorzugsweise unter Bildung von Isocyanuratstrukturen verbraucht wird. In Abhängigkeit von der Art des eingesetzten Ausgangsdiisocyanates bzw. Gemisches von Ausgangsdiisocyanaten, kann der mindestens anzustrebende Oligomerisierungrad variieren.

Der Reaktionsabbruch beim angestrebten Oligomerisierungsgrad kann beispielsweise durch Abkühlen des Reaktionsgemisches auf Raumtemperatur erfolgen. Vorzugsweise wird die Umsetzung aber durch Zugabe eines Katalysatorgiftes und gegebenenfalls nachfolgendes kurzzeitiges Erhitzen der Reaktionsmischung beispielsweise auf eine oberhalb 80°C liegende Temperatur abgebrochen.

Geeignete Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluolsulfonsäure, Trifluormethansulfonsäure, Perfluorbutansulfonsäure, Dodecylbenzolsulfonsäure, p-Toluolsulfonsäuremethylester und -ethylester, Mono- und Dialkylphosphate wie Monotridecylphosphat, Dibutylphosphat und Dioctylphosphat aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylestertrimethylsilylester.

Die zum Abbruch der Umsetzung benötigte Menge des Katalysatorgiftes richtet sich dabei nach der Menge des verwendeten Trimerisierungskatalysators; im allgemeinen wird eine äquivalente Menge des Katalysatorgiftes, bezogen auf den zu Beginn eingesetzten Katalysator, eingesetzt. Berücksichtigt man allerdings eventuell während der Umsetzung auftretende Verluste an Katalysator, so können zum Abbruch der Umsetzung auch schon 20 bis 80 Äquivalent-% des Katalysatorgiftes, bezogen auf die Menge des ursprünglich eingesetzten Katalysators, ausreichen.

Die genannten Katalysatorgifte können sowohl in Substanz als auch in einem geeigneten Lösungsmittel gelöst eingesetzt werden. Geeignete Lösungsmittel sind beispielsweise die bereits oben als mögliche Katalysatorlösungsmittel beschriebenen Lösungsmittel oder deren Gemische. Der Verdünnungsgrad kann innerhalb eines sehr breiten Bereichs frei gewählt werden, geeignet sind beispielsweise Lösungen ab einer Konzentration von 1 Gew.-%.

Neben den genannten Lösungsmitteln können auch die obengenannten Ausgangsdiisocyanate als Lösungsmittel für die Katalysatorgifte dienen, sofern diese ausreichend inert gegenüber Isocyanatgruppen sind, so dass sich lagerstabile Lösungen herstellen lassen.

Vorzugsweise wird das Reaktionsgemisch nach beendeter Umsetzung durch Dünnschichtdestillation im Vakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180°C, von flüchtigen Bestandteilen (wie beispielsweise überschüssigen Ausgangsdiisocyanaten und gegebenenfalls mitverwendeten Lösungsmitteln) befreit.

Ebenso ist es möglich, die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Polyisocyanat abzutrennen.

Der Restgehalt an monomerem Diisocyanat nach der Destillation bzw. Extraktion beträgt vorzugsweise ≤0,50 Gew.-%, besonders bevorzugt ≤0,3 Gew.-% und besonders bevorzugt < 0,10 Gew.-%. Der Anteil an monomerem Diisocyanat im mindestens einen Polyisocyanurat-Polyisocyanat kann größer als 0,10 Gew.-% sein, solange er im erfindungsgemäßen Polyisocyanatgemisch kleiner als 0,10 Gew.-% ist.

Neben dem mindestens einen Polyisocyanurat-Polyisocyanat enthält das erfindungsgemäße Polyisocyanatgemisch noch mindestens ein Polyallophanat-Polyisocyanat, welche beispielsweise durch Umsetzung der genannten Ausgangsdiisocyanate mit hydroxyfunktionellen Verbindungen erhalten werden.

In einer weiteren bevorzugten Ausführungsform umfasst das mindestens eine Polyallophanat-Polyisocyanat eine oder mehrere Allophanatgruppen, die jeweils über eine aliphatische, cycloaliphatische oder araliphatische Gruppe mit einem Molekulargewicht von ≥ 56 bis ≤ 316 g/mol, bevorzugt jeweils über eine 1,4-Butyl- oder 1,6-Hexylgruppe und besonders bevorzugt jeweils über eine 1,6-Hexylgruppe, chemisch miteinander verbunden sind.

Für den Fall, dass Mischungen verschiedener Ausgangsdiisocyanate zum Einsatz kommen, ist es ganz besonders bevorzugt, dass ≤ 30 Gew.-%, bevorzugt ≤ 10 Gew.-% und besonders bevorzugt ≥ 0 bis ≤ 5 Gew.-% der insgesamt eingesetzten Ausgangsdiisocyanate cycloaliphatische Diisocyanate sind und der Rest aliphatische Diisocyanate sind.

Geeignete hydroxyfunktionelle Verbindungen zur Herstellung der Polyallophanat-Polyisocyanate für das erfindungsgemäße Polyisocyanatgemisch sind beispielsweise beliebige ein- oder mehrwertige Alkohole mit bis zu 14 Kohlenstoffatomen, vorzugsweise 2 bis 6 Kohlenstoffatomen, wie z.B. die vorstehend als geeignete hydroxyfunktionelle Katalysatorlösungsmittel genannten ein- oder mehrwertigen Alkohole sowie Tetrahydrofurfurylalkohol, die isomeren Pentandiole, Hexandiole, Heptandiole und Octandiole, 1,10-Decandiol, 1,2- und 1,4-Cyclohexandiol, 1,4-Cyclohexandimethanol, 4,4'-(1-Methylethyliden)-biscyclohexanol, 1,1,1-Trimethylolethan, 1,2,6-Hexantriol, 1,1,1-Trimethylolpropan, 2,2-Bis(hydroxymethyl)-1,3-propandiol, Bis-(2-hydroxyethyl)-hydrochinon, 1,2,4- und 1,3,5-Trihydroxycyclohexan oder 1,3,5-Tris(2-hydroxyethyl)-isocyanurat aber auch um einfache Esteralkohole, wie z.B. Hydroxypivalinsäureneopentylglykolester.

Geeignete hydroxyfunktionelle Verbindungen zur Herstellung der Polyallophanat-Polyisocyanate sind auch die an sich bekannten höhermolekularen Polyhydroxylverbindungen vom Polyester-, Polycarbonat-, Polyestercarbonat- oder Polyethertyp, insbesondere solche des Molekulargewichtsbereiches 200 bis 2000 g/mol.

Als hydroxyfunktionelle Verbindungen geeignete Polyesterpolyole sind beispielsweise solche eines mittleren, aus Funktionalität und Hydroxylzahl berechenbaren Molekulargewichtes von 200 bis 4000 g/mol, vorzugsweise von 250 bis 2500 g/mol, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen, beispielsweise den obengenannten mit 2 bis 14 Kohlenstoffatomen, mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Die zur Herstellung der Polyesterpolyole verwendeten Säuren oder Säurederivate können aliphatischer, cycloaliphatischer und/oder aromatischer Natur sein und gegebenenfalls, z.B. durch Halogenatome, substituiert und/oder ungesättigt sein. Beispiele geeigneter Säuren sind beispielsweise mehrwertige Carbonsäuren des Molekulargewichtsbereichs 118 bis 300 g/mol oder deren Derivate wie beispielsweise Bernsteinsäure, Adipinsäure, Sebacinsäure, Phthalsäure, Isophthalsäure, Trimellithsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole können auch beliebige Gemische dieser beispielhaft genannten Ausgangsverbindungen eingesetzt werden.

Eine als hydroxyfunktionelle Verbindung alternativ einzusetzende Art von Polyesterpolyolen sind solche, wie sie sich in an sich bekannter Weise aus Lactonen und einfachen mehrwertigen Alkoholen, wie z.B. den oben beispielhaft genannten, als Startermolekülen unter Ringöffnung herstellen lassen. Geeignete Lactone zur Herstellung dieser Polyesterpolyole sind beispielsweise ß-Propiolacton, γ-Butyrolacton, δ- und δ-Valerolacton, ε-Caprolacton, 3,5,5- und 3,3,5-Trimethylcaprolacton oder beliebige Gemische solcher Lactone.

Als hydroxyfunktionelle Verbindungen geeignete Polyhydroxylverbindungen vom Polycarbonattyp stellen insbesondere die an sich bekannten Polycarbonatdiole dar, wie sie sich beispielsweise durch Umsetzung von zweiwertigen Alkoholen, beispielsweise solchen, wie sie oben in der Liste der mehrwertigen Alkohole des Molekulargewichtsbereichs 62 bis 400 g/mol beispielhaft genannt sind, mit Diarylcarbonaten, wie z.B. Diphenylcarbonat, Dialkylcarbonaten, wie z.B. Dimethylcarbonat, oder Phosgen herstellen lassen.

Als hydroxyfunktionelle Verbindungen geeignete Polyhydroxylverbindungen vom Polyestercarbonattyp sind insbesondere die an sich bekannten Estergruppen- und Carbonatgruppen aufweisende Diole, wie sie beispielsweise gemäß der Lehre der DE-A 1 770 245 oder WO 03/002630 durch Umsetzung zweiwertiger Alkohole mit Lactonen der oben beispielhaft genannten Art, insbesondere ε-Caprolacton und anschließende Reaktion der dabei entstehenden Polyesterdiole mit Diphenylcarbonat oder Dimethylcarbonat erhalten werden können.

Als hydroxyfunktionelle Verbindungen geeignete Polyetherpolyole sind insbesondere solche eines mittleren, aus Funktionalität und Hydroxylzahl berechenbaren Molekulargewichtes von 200 bis 2000 g/mol, vorzugsweise 250 bis 1000 g/mol, mit einem Hydroxylgruppen-Gehalt von 1,6 bis 25 Gew.-%, vorzugsweise 3,6 bis 20 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, wie die oben beschriebenen einfachen mehrwertigen Alkohole mit 2 bis 14 Kohlenstoffatomen, als Startermoleküle eingesetzt werden. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyetherpolyole sind auch die an sich bekannten Polyoxytetramethylenglykole, wie sie beispielsweise gemäß H. Meerwein et al., Angew. Chem. 72, 1960, 927 - 934 durch Polymerisation von Tetrahydrofuran erhalten werden können. Der Einsatz von Polyetherpolyolen ist allerdings nicht bevorzugt.

Bevorzugte hydroxyfunktionelle Verbindungen sind die vorstehend genannten einfachen mehrwertigen Alkohole, Ester- oder Etheralkohole, des Molekulargewichtsbereiches 62 bis 400 g/mol. Besonders bevorzugt sind dabei die oben innerhalb der Liste der einfachen mehrwertigen Alkohole genannten Diole und/oder Triole mit 2 bis 6 Kohlenstoffatomen. Ganz besonders bevorzugte hydroxyfunktionelle Verbindungen sind 1,2-Ethandiol, 1,2-Propandiol, 1,3-Propandiol, 1,3-Butandiol, 1,4-Butandiol, 1,6-Hexandiol, und/oder 1,1,1-Trimethylolpropan. Insbesondere bevorzugt ist die Verwendung von 1,1,1-Trimethylpropan.

In einer weiteren bevorzugten Ausführungsform wird das Polyallophanat-Polyisocyanate durch Oligomerisierung wenigstens eines aliphatischen, cycloaliphatischen oder araliphatischen monomeren Diisocyanats mit einem Molekulargewicht von ≥ 140 bis ≤ 400 g/mol und wenigstens einer hydroxyfunktionellen Verbindung mit einer OH-Funktionalität von ≥ 2 und ≤ 6 in Gegenwart eines Katalysators, erhalten.

Bevorzugt weist die hydroxyfunktionelle Verbindung eine OH-Funktionalität von ≥ 3 und ≤ 5 und/oder ein Molekulargewicht von ≥ 85 bis ≤ 2000 g/mol, besonders bevorzugt eine OH-Funktionalität von ≥ 3 und ≤ 4 und/oder ein Molekulargewicht von ≥ 130 bis ≤ 500 g/mol auf. Es können auch Mischungen solcher Alkohole verwendet werden.

Die Ausgangsdiisocyanate und hydroxyfunktionellen Verbindungen werden vorzugsweise in einem Äquivalentverhältnis von Isocyanatgruppen zu gegenüber Hydroxylgruppen von 4 : 1 bis 200 : 1, vorzugsweise von 5 : 1 bis 50 : 1 und besonders bevorzugt 5 : 1 bis 25 : 1, in Gegenwart mindestens eines geeigneten Katalysators der genannten Art umgesetzt.

Die Umsetzung zur Herstellung des Polyallophanat-Polyisocyanates kann unkatalysiert als thermisch induzierte Allophanatisierung durchgeführt werden. Bevorzugt kommen zur Reaktionsbeschleunigung aber geeignete Katalysatoren zum Einsatz. Geeignete Katalysatoren für die Umsetzung sind beispielsweise die in WO 2019/061019 A1 auf Seite 11, Zeile 13 bis Seite 13, Zeile 11 genannten Katalysatoren. Sie werden entweder als solche oder gelöst in einem geeigneten organischen Lösungsmittel zugegeben, um die Bildung der Allophanatgruppen zu beschleunigen. Bevorzugte Katalysator-Lösungsmittel sind solche, die gegenüber Isocyanaten reaktive Gruppen aufweisen und entsprechend in das Polymer eingebaut werden können. Dies sind beispielsweise ein- oder mehrwertige Alkohole wie Methanol, Ethanol, n-Propanol, Isopropanol, n-Butanol, n-Hexanol, 2-Ethyl-1-hexanol, Ethylenglycol, Propylenglycol, Isomere des Butandiols, 2-Ethyl-1,3-hexandiol, Glycerin, Etheralkohole wie 1-Methoxy-2-propanol, 3-Ethyl-3-hydroxymethyloxetan, Tetrahydrofurfurylalkohol, Ethylenglycolmonomethylether, Ethylenglycolmonobutylether, Dietyhlenglycolmonomethylether, Dietyhlenglycolmonoethylether, Diethylenglycolmonobutylether, Diethylenglycol, Dipropylenglycol, Polyethylenglycole, Polypropylenglycole, gemischte Polyethylen-/Polypropylenglycole sowie deren Monoalkylether, Esteralkohole wie Ethylenglycolmonoacetat, Propylenglycolmonolaurat, Glycerindiacetat, Glycerinmonobutyrat oder 2,2,4-Trimethyl-1,3-pentandiolmonoisobutyrat, ungesättigte Alkohole wie Allylalkohol, 1,1-Dimethylallylalkohol oder Oleylalkohol, araliphatische Alkohole wie Benzylalkohol oder monosubstituierte Amide wie N-Methylformamid, N-Methylacetamid, Cyanoacetamid oder 2-Pyorrolidinon oder Mischungen solcher Lösungsmittel.

Die Umsetzung erfolgt vorzugsweise unter Inertgasatmosphäre bei einer Temperatur im Bereich von 0 °C bis 150 °C, bevorzugt im Bereich zwischen 40 °C und 130 °C und besonders bevorzugt zwischen 70 °C und 120 °C.

Nachdem der gewünschte Umsetzungsgrad erreicht ist, wird die Umsetzung gestoppt. Dies kann beispielsweise durch Abkühlen der Reaktionsmischung erfolgen. Vorzugsweise erfolgt das Abstoppen durch Zugabe eines Katalysatorgifts und optional einer anschließenden Erwärmung der Reaktionsmischung auf eine Temperatur oberhalb von 80 °C.

Geeignete Katalysatorgifte (Stopper) sind dem Fachmann bekannt. Es handelt sich dabei beispielsweise um Salzsäure, Phosphorsäure, Phosphonsäure, Carbonsäurechloride wie Acetylchlorid, Benzoylchlorid oder Isophthaloyldichlorid, Sulfonsäuren oder Sulfonsäureester, wie beispielsweise Methansulfonsäureester, p-Toluolsulfonsäure, Trifluormethansulfonsläure, Perfluorbutansulfonsäure, Dodecylbenzolsulfonsäure, p-Toluolsulfonsäuremethylester, p-Toluolsulfonsäureetyhlester, Mono- oder Dialkylphosphate wie beispielsweise Tridecylphosphat, Dibutylphosphat, Dioctylphosphat, oder auch silylierte Säuren wie beispielsweise Methansulfonsäure-trimethylsilylester, Trifluormethansulfonsäure-trimethylsilylester, Tris(trimethylsilyl)phosphat oder Diethyl(trimethylsily)phosphat.

Die zum Abstoppen der Reaktion benötigte Menge des Katalysatorgifts hängt wesentlich von der eingesetzten Menge des Katalysators ab. Grundsätzlich ist eine äquivalente Menge des Stoppers erforderlich, aber da üblicherweise ein Teil des Katalysators anderweitig desaktiviert wird, kann auch eine geringere Menge an Stopper ausreichend sein.

Auch das Katalysatorgift kann als solches oder in Lösung zugegeben werden, wobei sich als Lösungsmittel beispielsweise die zuvor aufgelisteten Katalysator-Lösungsmittel eignen. Neben diesen Lösungsmitteln können auch die Ausgangsisocyanate als Lösungsmittel für die Katalysatorgifte verwendet werden.

Nachdem die Reaktion beendet wurde, erfolgt eine Abtrennung vom Ausgangsdiisocyanat aus dem Reaktionsprodukt. Diese erfolgt vorzugsweise destillativ, beispielsweise bei einem Druck unterhalb von 5 mbar, bevorzugt unterhalb von 1 mbar und besonders bevorzugt unterhalb von 0.5 mbar und beispielsweise bei einer Temperatur im Bereich von 100 bis 200 °C, vorzugsweise im Bereich von 120 bis 180 °C. Der Restgehalt an monomerem Diisocyanat nach der Destillation beträgt vorzugsweise ≤ 0,50 Gew.-%, besonders bevorzugt ≤ 0,3 Gew.-% und besonders bevorzugt < 0,10 Gew.-%. Der Anteil an monomerem Diisocyanat im mindestens einen Polyallophanat-Polyisocyanat kann größer als 0,10 Gew.-% sein, solange er im erfindungsgemäßen Polyisocyanatgemisch kleiner als 0,10 Gew.-% ist.

Vorzugsweise weist das Polyallophanat-Polyisocyanat eine mittlere Isocyanatfunktionalität ≥4 und/oder ein gewichtsmittleres Molekulargewicht von ≥ 3000 g/mol, bestimmt nach EN ISO 13885-1:2021-11, auf.

Vorliegend wird die mittlere Isocyanatfunktionalität der Polyisocyanurat-Polyisocyanate wenigstens enthaltenen Polyisocyanats nach folgender Formel bestimmt:

$$F_{(GPC)} = \frac{Mn_{(GPC)}}{100 \times 42 \over \%NCO_{(Titr.)}}$$

Worin der Isocyanatgruppengehalt als Gew.-% angegeben ist und titrimetrisch nach DIN EN ISO 11909:2007-05 bestimmt wird und das zahlenmittlere Molekulargewicht durch GPC nach DIN EN ISO 13885-1:2021-11 unter Verwendung von Polystyrol als Standard und Tetrahydrofuran als Eluent bestimmt wird.

Ein weiter Gegenstand der vorliegenden Erfindung ist ein Verfahren zur Herstellung eines erfindungsgemäßen Polyisocyanatgemisches, dadurch gekennzeichnet, dass mindestens ein Polyisocyanurat-Polyisocyanat und mindestens ein Polyallophanat-Polyisocyanat vermischt werden, wobei bevorzugt das mindestens ein Polyisocyanurat-Polyisocyanat ein gewichtsmittleres Molekulargewicht von ≤ 1000 g/mol, bestimmt nach DIN EN ISO 13885-1:2021-11, aufweist und/oder das mindestens eine Polyallophanat-Polyisocyanat ein gewichtsmittleres Molekulargewicht von ≥ 3000 g/mol, bestimmt nach DIN EN ISO 13885-1:2021-11, aufweist.

Das Vermischen erfolgt nach beliebigen Methoden und beliebiger Reihenfolge. Falls gewünscht kann im Verfahren ein geeignetes Lösungsmittel zugegeben werden. Geeignete Lösungsmittel sind hierbei die dem Fachmann allgemein als Lösungsmittel im Beschichtungsbereich bekannten und beispielhaft in diesem Text genannten.

In einer bevorzugten Ausführungsform des erfindungsgemäßen Verfahrens werden 30-70 Gewichtsteile des mindestens einen Polyisocyanurat-Polyisocyanates und 70-30 Gewichtsteile des mindestens einen Polyallophanat-Polyisocyanates vermischt. Hierbei kann in einer und/oder beider Polyisocyanate für die Vermischung ein oder mehrere der im vorliegenden Text genannten Lösemittel, bevorzugt wenigstens Butylacetat, enthalten sein. Falls ein oder mehrere Lösemittel mitverwendet werden, ist es besonders bevorzugt, dass das Polyallophanat-Polyisocyanat in dem Lösemittel vorliegt.

Ein weiterer Gegenstand der vorliegenden Erfindung ist eine Beschichtungszusammensetzung enthaltend mindestens ein erfindungsgemäßes Polyisocyanatgemisch und mindestens ein gegenüber Isocyanatgruppen reaktives Bindemittel.

In einer weiteren bevorzugten Ausführungsform enthält die erfindungsgemäße Beschichtungszusammensetzung das mindestens eine gegenüber Isocyanatgruppen reaktives Bindemittel in einer Komponente A) und das mindestens eine erfindungsgemäße Polyisocyanatgemisch in einer Komponente B). Eine solche bevorzugte Ausführungsform wird im Folgenden auch als Zwei-Komponenten-System bezeichnet.

Als "gegenüber Isocyanatgruppen reaktives Bindemittel" können alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, kurzkettige Polyamine aber auch Polyhydroxyverbindungen wie Polyetherpolyole, Polyesterpolyole, Polyurethanpolyole, Polysiloxanpolyole, Polycarbonatpolyole, Polyetherpolyamine, Polybutadienpolyole, Polyacrylatpolyole und/oder Polymethacrylatpolyole sowie deren Mischpolymerisate, im folgenden Polyacrylatpolyole, genannt.

Unabhängig ob es sich um die erfindungsgemäße Beschichtungszusammensetzung oder das bevorzugte erfindungsgemäße Zwei-Komponenten-System handelt ist es weiter bevorzugt, dass das mindestens eine gegenüber Isocyanatgruppen reaktives Bindemittel eine Polyhydroxyverbindung, bevorzugt ein Polyetherpolyol, Polyesterpolyol, Polyurethanpolyol, Polysiloxanpolyol, Polycarbonatpolyol, Polyetherpolyamin, Polybutadienpolyol, Polyacrylatpolyol und/oder Polymethacrylatpolyol sowie deren Mischpolymerisate und besonders bevorzugt ein Polycarbonatpolyol, Polyesterpoylol, Polyacrylatpolyol oder beliebige Mischungen der vorgenannten, ist.

Unabhängig ob es sich um die erfindungsgemäße Beschichtungszusammensetzung oder das bevorzugte erfindungsgemäße Zwei-Komponenten-System handelt ist es weiter bevorzugt, dass das das mindestens eine gegenüber Isocyanatgruppen reaktives Bindemittel wenigstens eine hydroxyfunktionelle Verbindung mit einem Gehalt an Hydroxylgruppen von ≥ 2,0 Gew.-%, bevorzugt von ≥ 3,0 Gew.-% und besonders bevorzugt von ≥ 3,5 Gew.-% bezogen auf den Feststoffgehalt des, gegenüber Isocyanatgruppen reaktiven, Bindemittels umfasst.

Vorzugsweise beträgt das Verhältnis vom erfindungsgemäßen Polyisocyanatgemisch zu gegenüber Isocyanatgruppen reaktiven Verbindungen in der erfindungsgemäßen Beschichtungszusammensetzung bzw. dem erfindungsgemäßen Zwei-Komponenten-System bezogen auf die Stoffmengen der Isocyanatgruppen zu den NCO-reaktiven Gruppen von 0,8 zu 1,0 bis 2,0 zu 1,0. Besonders bevorzugt ist ein Verhältnis von 1,0 zu 1,0 bis 1,5 zu 1,0. Ganz besonders bevorzugt ist ein Verhältnis von 1,05 zu 1,0 bis 1,25 zu 1,0.

Die Polyhydroxyverbindungen weisen bevorzugt massenmittlere Molekulargewichte Mw > 500 Dalton, gemessen mittels Gelpermeationschromatographie (GPC) gegen einen Polystyrolstandard, besonders bevorzugt zwischen 800 und 100.000 Dalton, insbesondere zwischen 1.000 und 50.000 Dalton auf.

Die Polyhydroxyverbindungen weisen bevorzugt eine OH-Zahl von 30 bis 400 mg KOH/g, insbesondere zwischen 100 und 300 mg KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Die Glasübergangstemperaturen, gemessen mit Hilfe von DSC-Messungen nach DIN-EN-ISO 1 1357-2, der Polyhydroxyverbindungen liegen bevorzugt zwischen -150 und 100 °C, besonders bevorzugt zwischen -120°C und 80°C.

Polyetherpolyole sind in an sich bekannter Weise durch Alkoxylierung von geeigneten StarterMolekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle.

Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Geeignete Polyesterpolyole sind beispielsweise in EP-A-0 994 1 17 und EP-A-1 273 640 beschrieben. Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ringöffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyhydroxyverbindungen, insbesondere solchen mit höheren Glasübergangstemperaturen, zum Einsatz kommen können.

Die erfindungsgemäß ganz besonders bevorzugten Polyacrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard. Die Glasübergangstemperatur der Copolymerisate liegt in der Regel zwischen -100 und 100 °C, insbesondere zwischen -50 und 80 °C (gemessen mittels DSC-Messungen nach DIN-EN-ISO 1 1357-2).

Die Polyacrylatpolyole weisen bevorzugt eine OH-Zahl von 60 bis 250 mg KOH/g, insbesondere zwischen 70 und 200 mg KOH/g, sowie eine Säurezahl zwischen 0 und 30 mg KOH/g, auf. Die Säurezahl gibt hierbei die Anzahl der mg Kaliumhydroxid an, die zur Neutralisation von 1 g der jeweiligen Verbindung verbraucht wird (DIN EN ISO 21 14).

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Ethylmethacrylat, Propylacrylat, Propylmeth-acrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat. erhalten. Geeignete Hydroxylgruppen aufweisende, olefinisch ungesättigte Monomere sind insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Alternativ ist es bevorzugt, dass das Bindemittel bzw. die Komponente A) der erfindungsgemäßen Beschichtungszusammensetzung ein Gemisch aus mindestens einem Polyacrylatpolyol und bis zu 15 Gew.-%, bevorzugt 2 bis 12 Gew.-% und besonders bevorzugt 5 bis 10 Gew.-%, bezogen auf die Gesamtmenge an Polyacrylatpolyol, mindestens eines Polyesterpolyols enthält.

Sowohl das erfindungsgemäße Beschichtungszusammensetzung als auch die Komponente A) und/oder Komponente B) des erfindungsgemäßen Zwei-Komponenten-Systems kann darüber hinaus übliche Hilfs- und Zusatzmittel in wirksamen Mengen enthalten. Wirksame Mengen sind für Lösemittel vorzugsweise bis zu 150 Gew.-%, besonders bevorzugt bis zu 100 Gew.-% und insbesondere bis zu 70 Gew.-%, jeweils bezogen auf die nichtflüchtigen Bestandteile des erfindungsgemäßen Zwei-Komponenten-Systems bzw. der erfindungsgemäßen Beschichtungszusammensetzung. Wirksame Mengen anderer Additive sind vorzugsweise bis zu 25 Gew.-%, besonders bevorzugt bis zu 10 Gew.-% und insbesondere bis zu 5 Gew.-%, jeweils wiederum bezogen auf die nichtflüchtigen Bestandteile.

Beispiele geeigneter Hilfs und Zusatzmittel sind insbesondere Lichtschutzmittel wie UV-Absorber und sterisch gehinderte Amine (HALS), weiterhin Stabilisatoren, Füllstoffe sowie Antiabsetzmittel, Entschäumungs-, Antikrater- und/oder Netzmittel, Verlaufsmittel, filmbildende Hilfsmittel, Reaktivverdünner, Lösemittel, Substanzen zur Rheologiesteuerung, Slipadditive und/oder Komponenten, die das Anschmutzen verhindern und/oder die Reinigungsfähigkeit der ausgehärteten Beschichtungen verbessern, ferner Mattierungsmittel.

Der Einsatz von Lichtschutzmitteln insbesondere von UV-Absorber wie beispielsweise substituierten Benztriazolen, S-Phenyltriazinen oder Oxalaniliden sowie sterisch gehinderten Aminen insbesondere mit 2,2,6,6-Tetramethyl-piperidyl-Strukturen - als HALS bezeichnet - ist beispielhaft beschrieben in A. Valet, Lichtschutzmittel für Lacke, Vincentz Verlag, Hannover, 1996.

Stabilisatoren wie beispielsweise Radikalfänger und andere Polymerisationsinhibitoren wie sterisch gehinderte Phenole stabilisieren Lackkomponenten während der Lagerung und sollen Verfärbungen während der Aushärtung verhindern. Für die Komponente B) kommen auch saure Stabilisatoren wie alkylsubstituierte Phosphorsäureteilester in Betracht.

Die erfindungsgemäße Beschichtungszusammensetzung bzw. das erfindungsgemäße Zwei-Komponenten-System kann weiterhin Pigmente, Farbstoffe und/oder Füllstoffe enthalten Die dafür eingesetzten Pigmente auch Metallic- oder andere Effektpigmente, Farbstoffe und/oder Füllstoffe sind dem Fachmann bekannt.

Als Füllstoffe sind solche Verbindungen bevorzugt, die die Optik der Beschichtung nicht negativ beeinflussen. Beispiele sind Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen.

Sind Füllstoffe, Mattierungsmittel oder Pigmente in der erfindungsgemäßen Beschichtungszusammensetzung bzw. im erfindungsgemäßen Zwei-Komponenten-System enthalten, kann der Zusatz von Antiabsetzmitteln sinnvoll sein, um eine Trennung der Bestandteile bei Lagerung zu verhindern.

Netz- und Verlaufsmittel verbessern die Oberflächenbenetzung und/oder den Verlauf von Lacken. Beispiele sind Fluortenside, Silikontenside sowie spezielle Polyacrylate. Rheologiesteuernde Additive sind wichtig um die Eigenschaften der Beschichtungszusammensetzung bzw. des Zwei-Komponenten-Systems bei der Applikation und in der Verlaufsphase auf dem Substrat zu steuern und sind beispielsweise aus den Patentschriften WO 94/22968, EP-A-0 276 501 , EP-A-0 249 201 oder WO 97/12945 bekannt; vernetzte polymere Mikroteilchen, wie sie beispielsweise in der EP-A-0 008 127 offenbart sind; anorganische Schichtsilikate wie Aluminium-Magnesium-Silikate, Natrium-Magnesium und Natrium-Magnesium-Fluor-Lithium-Schichtsilikate des Montmorillonit-Typs; Kieselsäuren wie Aerosil®; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate.

Die erfindungsgemäße Beschichtungszusammensetzung bzw. das erfindungsgemäße Zwei-Komponenten-System kann lösemittelfrei eingesetzt werden, enthält aber vorzugsweise in der Komponente A) und/oder Komponente B) mindestens ein Lösemittel.

Geeignete Lösemittel sind in dem Fachmann bekannter Art und Weise abgestimmt auf die verwendete Beschichtungszusammensetzung bzw. das verwendete Zwei-Komponenten-System sowie das Applikationsverfahren einzusetzen. Lösemittel sollen die eingesetzten Komponenten lösen und deren Vermischung fördern sowie Unverträglichkeiten vermeiden. Weiterhin sollen sie während der Applikation und der Härtung die Beschichtung auf die ablaufende Vernetzungsreaktion abgestimmt verlassen, so dass eine lösemittelfreie Beschichtung mit möglichst guter Optik und ohne Fehlstellen wie Kocher oder Nadelstiche entsteht. Insbesondere kommen Lösemittel in Betracht, die in der Zwei Komponenten Technologie zur Anwendung kommen. Beispiele sind Ketone wie Aceton, Methylethylketon oder Hexanon, Ester wie Ethylacetat, Butylacetat, Methoxyproylacetat, substituierte Glykole und andere Ether, Aromaten wie Xylol oder Solventnaphtha wie z.B. der Fa. Exxon-Chemie sowie Gemische der genannten Lösemittel.

Die erfindungsgemäße Beschichtungszusammensetzung bzw. das erfindungsgemäße Zwei-Komponenten-System lässt sich sehr gut zur Beschichtung eines Substrats verwenden.

Ein weiterer Gegenstand der vorliegenden Erfindung ist daher die Verwendung eines erfindungsgemäßen Polyisocyanatgemisches oder einer erfindungsgemäßen Beschichtungszusammensetzung zur Herstellung einer Beschichtung, bevorzugt einer Reparaturlackierung, auf einem Substrat, wobei das Substrat bevorzugt eine gegebenenfalls vorbehandelte Karosserie, insbesondere von einem Fahrzeug, oder deren Teile ist.

Neben einer solchen Verwendung ist ein weiterer Gegenstand der Erfindung ein Verfahren zur Herstellung einer Beschichtung, bevorzugt einer Reparaturlackierung, auf einem Substrat, umfassend die folgenden Schritte:

a) Bereitstellen eines gegebenenfalls vorbehandelten Substrats;

b) Aufbringen mindestens einer erfindungsgemäßen Beschichtungszusammensetzung

c) Trocknung der Beschichtungszusammensetzung bei RT oder unter forcierter Wärmezufuhr bei max. 60°C

Für den Einsatz in Schritt a) der vorstehend genannten erfindungsgemäßen Verfahren können die Substrate unbeschichtet oder beschichtet sein. Beschichtungen können beispielsweise Automobilerstlackierungen sein, bevor diese im erfindungsgemäßen Verfahren eingesetzt werden. Beispiele für Grundierungen wie sie bei der Automobilreparaturlackierung verwendet werden, sind lösemittelhaltige oder wässrige Grundierungen, Grundierfüller oder Schleiffüller, sowie Basislacke die dem Fachmann beispielsweise aus A. Goldschmidt, H. Streitberger, "BASF Handbuch Lackiertechnik", Vincentz-Verlag, Hannover, D, 2002 bekannt sind. Entsprechende Produkte sind z.B. erhältlich von der Fa. BASF Coatings GmbH, Münster, DE unter der Bezeichnung "Glasurit" oder von der Fa. Axalta Coatings Systems Germany GmbH, Wuppertal, DE unter der Bezeichnung "Spies Hecker Permasolid / Permahyd".

Geeignete Substrate sind beispielsweise einen oder mehrere Werkstoffe umfassende Substrate, insbesondere auch sogenannte Verbundwerkstoffe. Ein Substrat, das aus mindestens zwei Werkstoffen aufgebaut ist, wird erfindungsgemäß als Verbundwerkstoff bezeichnet. Geeignete Werkstoffe sind bevorzugt Stahl, Aluminium oder verzinkte Oberflächen.

Im Rahmen der Erfindung werden unter dem Begriff Kunststoff auch faserverstärkte Kunststoffe, wie beispielsweise Glas- oder Carbonfaser verstärkte Kunststoffe, und Kunststoffblends aus mindestens zwei oder mehr Kunststoffen verstanden.

Beispiele für erfindungsgemäß geeignete Kunststoffe sind ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1). Diese können auch in Form von Folien oder als Glas- oder Carbonfaser verstärkte Kunststoffe vorliegen.

Gemäß einer bevorzugten Ausführungsform des erfindungsgemäßen Verfahrens weist das Substrat eine Oberfläche auf, die komplett oder anteilig aus Kunststoff und/oder Metall ist. Besonders bevorzugt besteht das Substrat zumindest teilweise aus einem Verbundwerkstoff, insbesondere aus einem Verbundwerkstoff, umfassend Kunststoff und/oder Metall .

Gemäß einer weiteren Ausführungsform des erfindungsgemäßen Verfahrens umfasst das Substrat Metall, insbesondere kann das Substrat zu 80 Gew.-%, 70 Gew.-%, 60 Gew.-%, 50 Gew.-%, 25 Gew.-%, 10 Gew.-%, 5 Gew.-%, 1 Gew.-% aus Metall bestehen.

Gemäß einer Ausführungsform der Erfindung handelt es sich bei dem in Schritt a) bereitzustellenden Substrat um eine Karosserie oder Teile davon, die einen oder mehrere der zuvor genannten Werkstoffe umfasst. Bevorzugt umfasst die Karosserie oder deren Teile einen oder mehrere Werkstoffe, ausgewählt aus Metall, Kunststoff oder deren Mischungen.

Das Aufbringen der erfindungsgemäße Beschichtungszusammensetzung bzw. des erfindungsgemäßen Zwei-Komponenten-Systems in Schritt b) des erfindungsgemäßen Verfahrens kann aus Lösung erfolgen. Geeignete Methoden zum Aufbringen sind beispielsweise Drucken, Streichen, Rollen, Gießen, Tauchen, Wirbelschichtverfahren und/oder Spritzen wie beispielsweise Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Besonders bevorzugt ist hierbei das Aufbringen mittels Spritzen wie beispielsweise Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die in Schritt b) aufzubringende Beschichtungszusammensetzung bzw. das Zwei-Komponenten-System kann sowohl nach dem Vermischen der Komponenten A) und B) aufgetragen werden als auch erst unmittelbar beim Auftrag vermischt werden. Im ersten Fall hat das vermischte Zwei-Komponenten-System eine begrenzte Haltbarkeit, die sogenannte Topfzeit, da die Vernetzungsreaktion bereits langsam nach dem Vermischen fortschreitet. Im zweiten Fall zeigt sich der vorteilhafte Effekt der verlängerten Topfzeit beispielsweise in einer verbesserten Lackoptik, da die erfindungsgemäße Beschichtungszusammensetzung bzw. das Zwei-Komponenten-System einen gleichmäßigen Film auf dem Substrat bilden kann.

Als besonders praxisgerecht hat es sich für das erfindungsgemäße Verfahren erwiesen, wenn das Aushärten in Schritt c) bei einer Substrattemperatur von Raumtemperatur bis max. 60°C erfolgt.

Die Trocknung in Schritt c) des erfindungsgemäßen Verfahrens wird in weniger als 60 Minuten bei 60°C durchgeführt, ganz besonders bevorzugt in weniger als 30 Minuten. Alternativ kann eine RT Trocknung über mehrere Stunden erfolgen.

Trocknung, wie hier verwendet, bedeutet, dass die Beschichtungssysteme die Staubtrocknung (T1) erreicht haben. Prüfung nach DIN 53 150:2002-09

Mit dem erfindungsgemäßen Verfahren ist daher das gemeinsame Lackieren von reinen Metallsubstraten und Thermoplasten oder Verbundmaterialien möglich. Ein weiterer Vorteil des erfindungsgemäßen Verfahrens besteht darin, dass die ausgewählten Polyisocyanate im Lackierprozess, eine Verarbeitungszeit von mehr als 30 min. ermöglichen, eine gute Glanzhaltung der Beschichtung von über 75 Einheiten Glanz 20° nach Trocknung aufweisen als auch eine einfache Handvermischung durch einrühren von Hand mit einem Rührstab ermöglichen. Die einfache Handvermischung (vorliegend auch als gute Einarbeitungseigenschaft bezeichnet) ist ein weiterer Vorteil des erfindungsgemäßen Polyisocyanatgemisches. Hieraus ergibt sich die besonders bevorzugte Eignung im Bereich der handwerklichen Anwendungen, wie z.B. Reparaturlackierungen aber auch der Holzlackierung.

Gegenstand der Erfindung ist ferner eine Beschichtung, die durch das erfindungsgemäße Verfahren hergestellt wurde oder herstellbar ist.

Ein weiterer Gegenstand der Erfindung ist ein beschichtetes Substrat, erhältlich oder hergestellt durch das erfindungsgemäße Verfahren, wobei das gegebenenfalls vorbehandelte Substrat bevorzugt eine Karosserie, insbesondere von einem Fahrzeug, oder deren Teile ist und/oder bevorzugt einen oder mehrere der Werkstoffe ausgewählt aus Metall, Kunststoff oder deren Mischungen umfasst. Aufgrund der hervorragenden Eigenschaften des erfindungsgemäßen Polyisocyanatgemisches bzw. des erfindungsgemäßen Zwei-Komponenten-Systems ist es alternativ bevorzugt, dass das gegebenenfalls vorbehandelte Substrat aus Holz ist.

Gemäß einer bevorzugten Ausführungsform der Erfindung handelt es sich bei dem mit der erfindungsgemäßen Beschichtungszusammensetzung beschichteten Substrat um eine Karosserie, insbesondere von einem Fahrzeug oder deren Teile, oder um ein Möbelstück oder andere Werkstoffe aus Holz. Das Fahrzeug kann aus einem oder mehreren Werkstoffen aufgebaut sein. Geeignete Werkstoffe sind beispielsweise Metall, Kunststoff oder deren Mischungen. Das Fahrzeug kann jedes dem Fachmann bekannte Fahrzeug sein. Beispielsweise kann es sich bei dem Fahrzeug um ein Kraftfahrzeug, Lastkraftfahrzeug, Motorrad, Motorroller, Fahrrad oder ähnliches handeln. Bevorzugt handelt es sich bei dem Fahrzeug um ein Kraftfahrzeug und/oder Lastkraftfahrzeug, besonders bevorzugt handelt es sich um ein Kraftfahrzeug.

Gemäß einer weiteren bevorzugten Ausführungsform der Erfindung handelt es sich bei dem mit dem erfindungsgemäßen Beschichtung beschichteten Substrat um eine Karosserie oder Teile davon, die einen oder mehrere der Werkstoffe ausgewählt aus Metall, Kunststoff oder deren Mischungen umfasst.

Die Erfindung wird im Folgenden an Hand von Beispielen näher erläutert ohne auf diese beschränkt zu sein.

Beispiele:

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Die Rest-Monomeren Gehalte wurden nach DIN EN ISO 10283:2007-11 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Auslaufzeiten wurden nach DIN EN ISO 2431:2012-03 mit Hilfe eines Auslaufbechers mit 4 mm Düse bestimmt.

Die Trocknungeigenschaften der Beschichtungssysteme wurden nach DIN 53 150:2002-09 bestimmt.

Glanz der erhaltenen Beschichtungen wurde reflektometrisch nach DIN EN ISO 2813:1999-06 im 20°-Winkel gemessen.

Die Bestimmung der Pendeldämpfung nach König erfolgte nach DIN EN ISO 1522:2007-04 auf Glas-platten.

13C-NMR-Spektren wurden mit einem Bruker AV III HD 600 NMR Spektrometer mit Probenkopf Z150361_001 (CP BBO 600SS3 BB-H&F-05 ZE T) aufgenommen. Es wurden 512 Scans durchgeführt, bei einer Repititionszeit (D1) von 4s und einer Messzeit (AQ) von 1,57s.

Molekulargewichte wurden mittels Gelpermeationschromatographie gemäß DIN EN ISO 13885-1:2021-11 gemessen. Verwendet wurden vier Säulen (2x PSS SDV 50A, 5μ, 2x PSS SDV 100A, 5μ).

Zur Prüfung der Beschichtungen auf Lösungsmittelbeständigkeit wurden jeweils kleine Mengen der Lösungsmittel Xylol, 1-Methoxypropyl-2-acetat, Ethylacetat und Aceton in Reagenzgläser gegeben und mit einem Wattebausch an der Öffnung versehen, so dass eine mit Lösungsmittel gesättigte Atmosphäre innerhalb der Reagenzgläser entstand. Die Reagenzgläser wurden anschließend mit dem Wattebausch auf die Oberfläche der auf Glas applizierten Lacke gebracht und verblieben dort für 1 bzw. 5 Minuten. Nach Abwischen des Lösungsmittels wurde der Film auf Zerstörung/Erweichung/Haftverlust geprüft und bewertet (0 = keine Veränderung, 5 = Film völlig aufgelöst). Angegeben sind die Bewertungen für die vier Lösungsmittel jeweils in folgender Reihenfolge: Xylol, 1-Methoxypropyl-2-acetat, Ethylacetat, und Aceton in Form vier aufeinanderfolgender Ziffern. Die Prüfung auf Benzinbeständigkeit erfolgte analog unter Verwendung von Superbenzin E10.

**Polvisocvanat 1** (Biuretpolyisocyanat)

Biuretgruppen enthaltendes HDI-Polyisocyanat, hergestellt nach dem Verfahren der EP-B 1158013 (Beispiel 2b) durch kontinuierliche Umsetzung von 667 Teilen HDI mit 27 Teilen Hexamethylendiamin (HDA) in Gegenwart von einem Gew.-Teil Dibutylphosphat als Katalysator bei einer Temperatur von 280°C. Nicht umgesetztes HDI wurde im Anschluss an die Umsetzung durch Dünnschichtdestillation bei einer Temperatur von 130°C und einem Druck von 0,1 mbar entfernt. Das erhaltene Polyisocyanat wurde mit Butylacetat auf 75 Gew.-% Polyisocyanat-Anteil verdünnt und wies die folgenden Kenndaten auf.

| | |
|---|---|
| NCO-Gehalt: | 16,4 % |
| monomeres HDI: | 0,32 % |
| Viskosität (23°C): | 160 mPas |
| Allophanatgruppenanteil: | 0 mol-% |
| Isocyanuratgruppenanteil: | < 5 mol-% |
| Biuretgruppenanteil: | > 95 mol-% |
| Gewichtsmittleres Molekulargewicht Mw: | 1420 g/mol |

**Polvisocvanat 2** (Polyisocyanurat-Polyisocyanat)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass als Katalysatorlösemittel 2-Ethylhexanol statt 2-Ethyl-1,3-hexandiol eingesetzt wurde und die Reaktion bei einem NCO-Gehalt der Rohmischung von 42,5 % durch Zugabe von Dibutylphosphat gestoppt wurde. Anschließend wurde nicht umgesetztes HDI durch Dünnschichtdestillation bei einer Temperatur von 130 °C und einem Druck von 0,2 mbar abgetrennt. Das erhaltene Polyisocyanurat-Polyisocyanat wies die folgenden Kenndaten auf.

| | |
|---|---|
| NCO-Gehalt: | 22,9 % |
| monomeres HDI: | 0,08 % |
| Viskosität (23°C): | 1210 mPas |
| Allophanatgruppenanteil: | 5 mol-% |
| Isocyanuratgruppenanteil: | 95 mol-% |
| Gewichtsmittleres Molekulargewicht Mw: | 760 g/mol |

**Polyisocyanat 3** (Polyisocyanurat-Polyisocyanat)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt. Das erhaltene Polyisocyanat wurde mit Butylacetat auf 90 Gew.-% Polyisocyanat-Anteil verdünnt und wies die folgenden Kenndaten auf.

| | |
|---|---|
| NCO-Gehalt: | 19,6 % |
| monomeres HDI: | 0,08 % |
| Viskosität (23°C): | 500 mPas |
| Allophanatgruppenanteil: | 8 mol-% |
| Isocyanuratgruppenanteil: | 92 mol-% |
| Gewichtsmittleres Molekulargewicht Mw: | 1120 g/mol |

**Polyisocyanat 4** (Polyisocyanurat/Allophanatpolyisocyanat)

100 Teile Hexamethylendiisocyanat (HDI) wurden vorgelegt und auf 105 °C temperiert. Bei dieser Temperatur wurden unter Rühren 10 Teile Trimethylolpropan zugegeben. Nach Beendigung der Urethanisierungsreaktion wurde die Reaktionstemperatur wurde auf 95 °C abgesenkt. Anschließend wurde durch Zugabe einer 0,5%-igen Trimethylbenzylammoniumhydroxid-Lösung in 2-Ethylhexanol die Trimerisierungs- und Allophanatisierungsreaktion gestartet. Beim Erreichen eines NCO-Werts von 36 % wurde die Reaktion beendet, indem eine Stopperlösung (10% Dibutylphosphat in HDI) in einem Gewichtsverhältnis von 100 Teilen Katalysatorlösung zu 3 Teilen Stopperlösung zugegeben wurden. Es wurde noch weitere 30 Minuten bei 95 °C gerührt und anschließend das verbliebene monomere HDI in einem Kurzwegverdampfer bei 140 °C und 0,1 mbar abgetrennt. Das erhaltene Polyisocyanat wurde mit Butylacetat auf 80 Gew.-% Polyisocyanat-Anteil verdünnt und wies die folgenden Kenndaten auf.

| | |
|---|---|
| NCO-Gehalt: | 15,4 % |
| monomeres HDI: | 0,07 % |
| Viskosität (23°C): | 500 mPas |
| Allophanatgruppenanteil: | 70 mol-% |
| Isocyanuratgruppenanteil: | 30 mol-% |
| Gewichtsmittleres Molekulargewicht Mw: | 3140 g/mol |

**Polyisocyanatgemisch 5** (erfindungsgemäß)

Es wurden 56 Teile des Polyisocyanates 2 mit 24 Teilen des unverdünnten Polyisocyanates 3 und 20 Teilen Butylacetat verdünnt. Das so erhaltene Polyisocyanatgemisch wies die folgenden Kenndaten auf:

| | |
|---|---|
| NCO-Gehalt: | 17,6 % |
| monomeres HDI: | 0,06 % |
| Viskosität (23°C): | 128 mPas |
| Allophanatgruppenanteil: | 28 mol-% |
| Isocyanuratgruppenanteil: | 72 mol-% |
| Gewichtsmittleres Molekulargewicht Mw: | 1520 g/mol |

**Polyisocyanatgemisch 6** (erfindungsgemäß)

Es wurden 32 Teile des Polyisocyanates 2 mit 48 Teilen des unverdünnten Polyisocyanates 3 und 20 Teilen Butylacetat verdünnt. Das so erhaltene Polyisocyanatgemisch wies die folgenden Kenndaten auf:

| | |
|---|---|
| NCO-Gehalt: | 16,7 % |
| monomeres HDI: | 0,07 % |
| Viskosität (23°C): | 267 mPas |
| Allophanatgruppenanteil: | 47 mol-% |
| Isocyanuratgruppenanteil: | 53 mol-% |
| Gewichtsmittleres Molekulargewicht Mw: | 2305 g/mol |

**Beispiel 1, 2, 3, 4 und 5** (Beschichtungszusammensetzungen und lacktechnische Prüfung; erfindungsgemäß und Vergleich)

Variierende Gew.-Teile eines handelsüblichen Polyesterpolyols (Desmophen® XP 775; Fa. Covestro AG, Leverkusen, DE) mit einem Festkörpergehalt von 75 Gew.-% und einem OH-Gehalt (bezogen auf Lieferform) von 9,5%, entsprechend einem Äquivalentgewicht von 180 g/val OH, wurden mit 0,80 Gew.-Teilen einer 50 %igen Lösung eines handelsüblichen Radikalfängers (Tinuvin 292, BASF SE) in Butylacetat, 1,20 Gew.-Teilen einer 50 %igen Lösung eines handelsüblichen UV-Absorbers (Tinuvin 384-2, BASF SE) in Butylacetat, 1,20 Gew.-Teilen einer 10%igen Lösung eines handelsüblichen Verlaufmittels (Byk 331, Byk-Chemie GmbH), 2,50 Gew.-Teilen einer 1 %igen Lösung von Dibutylzinndilaurat (DBTL) in Butylacetat versetzt und durch intensives Rühren homogen vermischt.
Danach werden unterschiedliche Gew. Teile eines zu gleichen Gew.-Teilen aus Butylacetat, MPA und Xylol bestehenden Lösemittelgemisches bei Raumtemperatur durch intensives Rühren homogen eingearbeitet, um in den zu verarbeitenden Beschichtungen einen nicht flüchtigen Anteil von 56 Gew.-% zu erhalten.
Anschließend wurden variierende Gew.-Teile der Polyisocyanate 1, 3, 4 und die Polyisocyanatgemische 5 und 6 ebenfalls in Butylacetat, entsprechend einem Äquivalentverhältnis von Isocyanatgruppen zu Hydroxylgruppen von 1:1 als Vernetzerkomponente von Hand mit einem Rührstab eingerührt.
Die Beschichtungszusammensetzungen 1 bis 5 wurden mit Hilfe eines Filmziehrahmens jeweils in einer Naßfilm-Schichtdicke von ca. 150 μm auf Glasplatten aufgebracht und innerhalb von 30 Minuten bei 60°C ausgehärtet sowie 16 Stunden bei 60°C gealtert.
Nachstehend zeigt Tabelle 1 die Zusammensetzungen der Beschichtungszusammensetzungen 1 bis 5 in Gew.-Teilen, Tabelle 2 die Ergebnisse der anwendungstechnischen Prüfungen der erhaltenen Beschichtungen im Vergleich.

**Tabelle 1:** Vergleichsbeispiele 1, 2 und 3 sowie erfindungsgemäße Beispiele 4 und 5 - Zusammensetzung der Beschichtungsmittel

| Beispiel | 1 (Vergleich) | 2 (Vergleich) | 3 (Vergleich) | 4 (erf.) | 5 (erf.) |
|---|---|---|---|---|---|
| Desmophen XP 775 (75%ig in BA) | 45,60 | 45,40 | 42,10 | 45,60 | 43,80 |
| Tinuvin 292 (50%ig in BA) | 0,80 | 0,80 | 0,80 | 0,80 | 0,80 |
| Tinuvin 384 - 2 (50%ig in BA) | 1,20 | 1,20 | 1,20 | 1,20 | 1,20 |
| Byk 331 (10%ig in BA) | 1,20 | 1,20 | 1,20 | 1,20 | 1,20 |
| DBTL (1%ig in BA) | 2,50 | 2,50 | 2,50 | 2,50 | 2,50 |
| BA : MPA : Xylol = 1 : 1 : 1 | 34,10 | 44,90 | 38,30 | 38,10 | 38,20 |
| Polyisocyanat 1 (75%ig in BA) | 64,60 | - | - | - | - |
| Polyisocyanat 3 (90%ig in BA) | - | 54,00 | - | - | - |
| Polyisocyanat 4 (80%ig in BA) | - | - | 63,80 | - | - |
| Polyisocyanatgemisch 5 (80%ig in BA) | - | - | - | 60,50 | - |
| Polyisocyanatgemisch 6 (80%ig in BA) | - | - | - | - | 62,20 |
| Auslaufzeit DIN 4 mm [s] | 19 | 16 | 18 | 16 | 16 |
| 30 min nach Vernetzung | 39 | 21 | 38 | 21 | 22 |
| 60 min. nach Vernetzung | geliert | 91 | geliert | 115 | 118 |

**Tabelle 2:** Vergleichsbeispiele 1, 2 und 3 sowie erfindungsgemäße Beispiele 4 und 5 - Lacktechnische Eigenschaften

| Beispiel | | 1 (Vergleich) | 2 (Vergleich) | 3 (Vergleich) | 4 (erf.) | 5 (erf.) |
|---|---|---|---|---|---|---|
| Schichtdicke [$\mu$m] | | ca. 40 | ca. 40 | ca. 40 | ca. 40 | ca. 40 |
| Glanz 20° | | 89 | 41 | 87 | 78 | 84 |
| Lösemittelbeständigkeit 30 min/60°C+ 16h/ 60°C (X, MPA, EA, A) | 1 min | 0002 | 0002 | 0000 | 0001 | 0001 |
| Lösemittelbeständigkeit 30 min/60°C+ 16 h / 60°C (X, MPA, EA, A) | 5 min | 0002 | 0024 | 0001 | 0002 | 0002 |

Wie aus Tabelle 2 zu erkennen ist, erreichen die Biuret-basierten und Allophanat-basierten Isocyanatsysteme (Vergleichsbeispiele 1 und 3) zwar einen hohen Glanz und eine gute Lösemittelbeständigkeit, haben aber keine befriedigende Verarbeitungszeit, da die Viskosität schon nach 30 min signifikant zunimmt. Umgekehrt erreicht ein Isocyanurat-basiertes System (Vergleichsbeispiel 2) zwar eine gute Verarbeitungszeit, aber nur einen mangelhaften Glanz.

Auch die Chemikalienresistenz erreicht nicht ganz das hohe Niveau der Vergleichssysteme, insbesondere gegenüber Aceton als Testsubstanz.

Lediglich die erfindungsgemäßen Polyisocyanatgemische führen zu High Solids Lacksystemen (nicht-flüchtiger Anteil (nfA) bei Verarbeitung von >56 Gew.%), die bei hoher Chemikalienresistenz sowohl eine lange Verarbeitungszeit, wie auch eine gute Optik aufweisen.

**Patentansprüche**

1. Polyisocyanatgemisch, enthaltend mindestens ein Polyisocyanurat-Polyisocyanat und mindestens ein Polyallophanat-Polyisocyanat, wobei das Polyisocyanatgemisch

einen Gehalt an monomeren Diisocyanaten von < 0,10 Gew.-%, bestimmt nach DIN EN ISO 10283:2007-11 gaschromatographisch mit internem Standard,
einen Isocyanuratgruppenanteil von ≥ 40 mol-% bis ≤ 85 mol-%, bestimmt durch NMR spektroskopische Analyse und bezogen auf die Gesamtmenge an Isocyanuratgruppen und Allophanatgruppen des Polyisocyanatgemisches, und
einen Allophanatgruppenanteil von ≥ 15 mol-% bis ≤ 60 mol-%, bestimmt durch NMR spektroskopische Analyse und bezogen auf die Gesamtmenge an Isocyanuratgruppen und Allophanatgruppen des Polyisocyanatgemisches, aufweist.

2. Polyisocyanatgemisch nach Anspruch 1, **dadurch gekennzeichnet, dass** es

einen Isocyanuratgruppenanteil von ≥ 45 mol-% bis ≤ 80 mol-%, bevorzugt ≥ 50 mol-% bis ≤ 75 mol-% und besonders bevorzugt ≥ 53 mol-% bis ≤ 72 mol-%, bestimmt durch NMR spektroskopische Analyse und bezogen auf die Gesamtmenge an Isocyanuratgruppen und Allophanatgruppen des Polyisocyanatgemisches, und/oder
einen Allophanatgruppenanteil von ≥ 20 mol-% bis ≤ 55 mol-%, bevorzugt ≥ 25 mol-% bis ≤ 50 mol-% und besonders bevorzugt ≥ 28 mol-% bis ≤ 47 mol-%, bestimmt durch NMR spektroskopische Analyse und bezogen auf die Gesamtmenge an Isocyanuratgruppen und Allophanatgruppen des Polyisocyanatgemisches, aufweist.

3. Polyisocyanatgemisch nach Anspruch 1 oder 2, **dadurch gekennzeichnet, dass** es ein gewichtsmittleres Molekulargewicht von ≥ 1000 g/mol bis ≤ 3000 g/mol, bevorzugt von ≥ 1300 g/mol bis ≤ 2700 g/mol und besonders bevorzugt von ≥ 1500 g/mol bis ≤ 2500 g/mol, bestimmt nach DIN EN ISO 13885-1:2021-11, aufweist.

4. Polyisocyanatgemisch nach einem der Ansprüche 1 bis 3, **dadurch gekennzeichnet, dass** sie eine Polydispersität von ≥ 1,5 bis ≤ 2,5, bevorzugt von ≥ 1,7 bis ≤ 2,2, bestimmt nach DIN 55672-1:2016-03, aufweist.

5. Polyisocyanatgemisch nach einem der Ansprüche 1 bis 4, **dadurch gekennzeichnet, dass** das mindestens eine Polyisocyanurat-Polyisocyanat eine oder mehrere Isocyanuratgruppen enthält, die jeweils über eine aliphatische, cycloaliphatische oder araliphatische Gruppe mit einem Molekulargewicht von ≥ 56 bis ≤ 316 g/mol, bevorzugt jeweils über eine 1,4-Butyl- oder 1,6-Hexylgruppe und besonders bevorzugt jeweils über eine 1,6-Hexylgruppe, chemisch miteinander verbunden sind, umfasst.

6. Polyisocyanatgemisch nach einem der Ansprüche 1 bis 5, **dadurch gekennzeichnet, dass** das mindestens eine Polyallophanat-Polyisocyanat eine oder mehrere Allophanatgruppen enthält, die jeweils über eine aliphatische, cycloaliphatische oder araliphatische Gruppe mit einem Molekulargewicht von ≥ 56 bis ≤ 316 g/mol, bevorzugt jeweils über eine 1,4-Butyl- oder 1,6-Hexylgruppe und besonders bevorzugt jeweils über eine 1,6-Hexylgruppe chemisch miteinander verbunden sind, umfasst.

7. Verfahren zur Herstellung eines Polyisocyanatgemisches nach einem der Ansprüche 1 bis 6, **dadurch gekennzeichnet, dass** mindestens ein Polyisocyanurat-Polyisocyanat und mindestens ein Polyallophanat-Polyisocyanat vermischt werden, wobei bevorzugt das mindestens eine Polyisocyanurat-Polyisocyanat ein gewichtsmittleres Molekulargewicht von ≤ 1000 g/mol, bestimmt nach DIN EN ISO 13885-1:2021-11, aufweist und/oder das mindestens eine Polyallophanat-Polyisocyanat ein gewichtsmittleres Molekulargewicht von ≥ 3000 g/mol, bestimmt nach DIN EN ISO 13885-1:2021-11, aufweist.

8. Verfahren nach Anspruch 7, **dadurch gekennzeichnet, dass** 30-70 Gewichtsteile des mindestens einen Polyisocyanurat-Polyisocyanates und 70-30 Gewichtsteile des mindestens einen Polyallophanat-Polyisocyanates vermischt werden.

9. Beschichtungszusammensetzung enthaltend mindestens ein Polyisocyanatgemisch nach einem der Ansprüche 1 bis 7 und mindestens ein gegenüber Isocyanatgruppen reaktives Bindemittel.

10. Beschichtungszusammensetzung nach Anspruch 9, **dadurch gekennzeichnet, dass** sie das mindestens eine gegenüber Isocyanatgruppen reaktives Bindemittel in einer Komponente A) und das mindestens eine Polyisocyanatgemisch nach einem der Ansprüche 1 bis 7 in einer Komponente B) enthält.

11. Beschichtungszusammensetzung nach Anspruch 9 oder 10, **dadurch gekennzeichnet, dass** das mindestens eine gegenüber Isocyanatgruppen reaktives Bindemittel eine Polyhydroxyverbindung, bevorzugt ein Polyetherpolyol, Polyesterpolyol, Polyurethanpolyol, Polysiloxanpolyol, Polycarbonatpolyol, Polyetherpolyamin, Polybutadienpolyol, Polyacrylatpolyol und/oder Polymethacrylatpolyol sowie deren Mischpolymerisate und besonders bevorzugt ein Polyesterpoylol, Polyacrylatpolyol oder beliebige Mischungen der vorgenannten, ist.

12. Beschichtungszusammensetzung nach einem der Ansprüche 9 bis 11, **dadurch gekennzeichnet, dass** das mindestens eine gegenüber Isocyanatgruppen reaktives Bindemittel wenigstens eine hydroxyfunktionelle Verbindung mit einem Gehalt an Hydroxylgruppen von $\geq 2{,}0$ Gew.-%, bevorzugt von $\geq 3{,}0$ Gew.-% und besonders bevorzugt von $\geq 3{,}5$ Gew.-% bezogen auf den Feststoffgehalt des, gegenüber Isocyanatgruppen reaktiven, Bindemittels umfasst.

13. Verwendung eines Polyisocyanatgemisches nach einem der Ansprüche 1 bis 7 oder einer Beschichtungszusammensetzung nach einem der Ansprüche 9 bis 12 zur Herstellung einer Beschichtung auf einem Substrat, wobei das Substrat bevorzugt eine gegebenenfalls vorbehandelte Karosserie, insbesondere von einem Fahrzeug, oder deren Teile ist.

14. Verfahren zur Herstellung einer Beschichtung auf einem Substrat, umfassend die folgenden Schritte:

   a) Bereitstellen eines gegebenenfalls vorbehandelten Substrats;
   b) Aufbringen mindestens einer Beschichtungszusammensetzung gemäß einem der Ansprüche 9 bis 12;
   c) Aushärten der Beschichtungszusammensetzung unter Wärmezufuhr.

15. Beschichtetes Substrat, erhältlich oder hergestellt durch ein Verfahren nach Anspruch 14, wobei das gegebenenfalls vorbehandelte Substrat bevorzugt eine Karosserie, insbesondere von einem Fahrzeug, oder deren Teile ist und/oder bevorzugt einen oder mehrere der Werkstoffe ausgewählt aus Metall, Kunststoff oder deren Mischungen umfasst.

Europäisches Patentamt

European Patent Office

Office européen des brevets

# EUROPÄISCHER RECHERCHENBERICHT

Nummer der Anmeldung

EP 22 18 2811

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 767 983 A1 (SANYU REC CO LTD [JP]; ASAHI KASEI CHEMICALS CORP [JP]) 20. August 2014 (2014-08-20) * Absätze [0086], [0087], [0091], [0092], [0094], [0095] * ----- | 1-15 | INV. C08G18/78 C08G18/79 C08G18/73 C09D175/06 |
| X | JP 2007 197642 A (ASAHI KASEI CHEMICALS CORP) 9. August 2007 (2007-08-09) * Absätze [0055], [0057], [0059]; Tabelle 1 * ----- | 1-15 | |
| X | JP 2008 024828 A (ASAHI KASEI CHEMICALS CORP) 7. Februar 2008 (2008-02-07) * Absätze [0080] - [0083]; Tabelle 1 * ----- | 1-15 | |
| X | EP 3 418 343 A1 (MITSUI CHEMICALS INC [JP]) 26. Dezember 2018 (2018-12-26) * Vergleichsbeispiel 3 * * Absätze [0214] - [0219]; Tabelle 1 * ----- | 1-15 | |
| T | Anonymous: "Alkylgruppe – Wikipedia", , 22. August 2022 (2022-08-22), XP093000380, Gefunden im Internet: URL:https://de.wikipedia.org/wiki/Alkylgruppe [gefunden am 2022-11-21] * das ganze Dokument * ----- | 1-15 | RECHERCHIERTE SACHGEBIETE (IPC) C08G C09D |

Der vorliegende Recherchenbericht wurde für alle Patentansprüche erstellt

| Recherchenort | Abschlußdatum der Recherche | Prüfer |
|---|---|---|
| München | 1. Dezember 2022 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 18 2811

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-12-2022

| Im Recherchenbericht angeführtes Patentdokument | Datum der Veröffentlichung | Mitglied(er) der Patentfamilie | Datum der Veröffentlichung |
|---|---|---|---|
| EP 2767983 A1 | 20-08-2014 | CN 103858180 A | 11-06-2014 |
| | | EP 2767983 A1 | 20-08-2014 |
| | | JP 5697755 B2 | 08-04-2015 |
| | | JP WO2013054659 A1 | 30-03-2015 |
| | | KR 20140082773 A | 02-07-2014 |
| | | MY 167391 A | 16-08-2018 |
| | | TW 201326304 A | 01-07-2013 |
| | | US 2014248497 A1 | 04-09-2014 |
| | | WO 2013054659 A1 | 18-04-2013 |
| JP 2007197642 A | 09-08-2007 | JP 4919667 B2 | 18-04-2012 |
| | | JP 2007197642 A | 09-08-2007 |
| JP 2008024828 A | 07-02-2008 | JP 5334361 B2 | 06-11-2013 |
| | | JP 2008024828 A | 07-02-2008 |
| EP 3418343 A1 | 26-12-2018 | CN 108473842 A | 31-08-2018 |
| | | EP 3418343 A1 | 26-12-2018 |
| | | KR 20180085016 A | 25-07-2018 |
| | | PH 12018501465 A1 | 04-03-2019 |
| | | TW 201800236 A | 01-01-2018 |
| | | US 2019010372 A1 | 10-01-2019 |
| | | WO 2017142008 A1 | 24-08-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0277353 A1
- DE 839133 A2
- WO 2019061019 A1
- GB 2221465 A
- GB 2222161 A
- DE 3240613 A
- DE 3219608 A
- EP 0100129 A
- GB 1391066 A
- GB 1386399 A
- GB 809809 A
- EP 0056158 A
- EP 0056159 A
- EP 0033581 A
- EP 2883895 A
- DE 1667309 A
- EP 0013880 A
- EP 0047452 A
- EP 3765 A
- EP 10589 A
- DE 2631733 A
- EP 0671426 A
- EP 1599526 A
- US 4789705 A
- EP 1229016 A

- WO 2005087828 A
- EP 0339396 A
- EP 0379914 A
- EP 0443167 A
- EP 0798299 A
- EP 0896009 A
- EP 0962455 A
- EP 0668271 A
- WO 1999023128 A
- EP 0102482 A
- WO 2013167404 A
- EP 0962454 A
- WO 2015124504 A
- WO 2017029266 A
- DE 1770245 A
- WO 03002630 A
- EP 0994117 A
- EP 1273640 A
- WO 0109260 A
- WO 9422968 A
- EP 0276501 A
- EP 0249201 A
- WO 9712945 A
- EP 0008127 A
- EP 330966 A

**In der Beschreibung aufgeführte Nicht-Patentliteratur**

- **JUSTUS LIEBIGS.** *Annalen der Chemie,* 1949, vol. 562, 75-136
- *European Polymer Journal,* 1979, vol. 16, 147-148
- **H. MEERWEIN et al.** *Angew. Chem.,* 1960, vol. 72, 927-934

- **A. VALET.** Lichtschutzmittel für Lacke. Vincentz Verlag, 1996
- Lacke und Druckfarben. Römpp Lexikon. Georg Thieme Verlag, 1998, 250-252
- **A. GOLDSCHMIDT ; H. STREITBERGER.** BASF Handbuch Lackiertechnik. Vincentz-Verlag, 2002